# EUROPEAN PATENT APPLICATION

(11) **EP 4 707 905 A1**
(43) Date of publication of application: **11.03.2026**
(21) Application number: 25199034.7
(22) Date of filing: 29.08.2025
(51) Int. Cl.: G02C 7/08

(54) **ADAPTIVE OPTICAL APPARATUS WITH MYOPIA CONTROL**

(30) Priority: 10.09.2024 FI 20246106
(71) Applicant: IXI Eyewear Oy, 02150 Espoo (FI)
(72) Inventor: Virtanen, Juha, 00560 Helsinki (FI)
(74) Representative: Moosedog Oy

(57) **Abstract**

An optical apparatus (100) comprises a lens stack (102a, 102b) comprising an active lens (110) and a passive lens (112). A magnitude of a negative optical power at a central portion (114) of the passive lens is larger than a magnitude of a negative optical power at a peripheral portion (116) of the passive lens. When it is detected that a focussing distance of a user is less than a first predefined threshold distance, a magnitude of a positive optical power to be produced in the active lens is selected, based on whether the user's gaze passes through the central portion or the peripheral portion of the passive lens. A magnitude of the positive optical power is smaller than the magnitude of the negative optical power at the central portion of the passive lens. A drive signal is generated to control the active lens to produce the positive optical power in the active lens.

## Description

### TECHNICAL FIELD

The present disclosure relates to adaptive optical apparatuses with myopia control. The present disclosure also relates to methods employing adaptive optical apparatuses for myopia control.

### BACKGROUND

Prescription lenses having fixed negative optical powers are widely used for myopia correction (namely, for distance vision). In such prescription lenses for myopia correction, a fixed negative optical power is provided in an entirety of a lens. With perfectly correct central vision, peripheral vision tends to focus behind a retina of a user; this promotes further growth of the user's eye. Another problem with such prescription lenses is that the fixed negative optical power is provided continuously. In other words, there is no provision for discontinuing the fixed negative optical power when a user's eye needs to focus on objects in close proximity. As a result, an eye lens of the user is required to generate many dioptres to first overcome the negative optical power and then generate close focus to see clearly the objects in close proximity. This expedites myopia development in the user. This problem is more pronounced in children, because their eyes continue to grow during childhood, and conventional prescription lenses for myopia correction (with fixed negative optical powers) cause further myopia development.

In an attempt to overcome the aforesaid problems at least partially, some conventional optical apparatuses provide a smaller negative optical power at a peripheral portion of a given lens as compared to a central portion of the given lens. In such optical apparatuses, a difference between a negative optical power at the central portion and the negative optical power the peripheral portion could, for example, be as high as 3.50 dioptres. Said difference is often referred to as a myopia control value. Having such a myopia control value works well with contact lenses, but leads to blurred vision in case of eyeglass lenses when a gaze direction of a user is off centre.

In an attempt to reduce myopia development, some other conventional optical apparatuses employ techniques like Defocus Incorporated Multiple Segments (DIMS) and Highly Aspherical Lenslet Target (HALT) technology. A lens of such an optical apparatus acts much like a single vision lens for myopia correction (namely, having a negative optical power over an entirety of the lens), but with an overlaying peripheral portion for myopia control. The overlaying peripheral portion has small lenslets or rings with spaces therebetween, which provide some positive optical strength. These lenslets or rings create a differential myopic defocus across a retina of the user. However, such conventional optical apparatuses suffer from some disadvantages. Firstly, in such an optical apparatus, various portions of the optical apparatus produce fixed optical powers, and do not take into account whether the user is looking through a central portion or a peripheral portion of a given lens. As a result, the user's eyes are required to over-accommodate. Secondly, the lenslets or rings in the overlaying peripheral portion work by creating defocus, and therefore, provide only a limited field of view in between for vision correction. This causes reduced contrast and some blurring.

Moreover, there exist optical apparatuses that employ adaptive lenses to produce a negative optical power for distance viewing. Such adaptive lenses can be switched on and off on a need basis. In order to produce negative optical powers, such adaptive lenses are typically implemented as negative Fresnel lenses. However, negative Fresnel lenses are known to cause optical artifacts.

Therefore, in light of the foregoing discussion, there exists a need to overcome the aforementioned drawbacks.

### SUMMARY

The present disclosure seeks to provide an adaptive optical apparatus with myopia control and a method employing such an adaptive optical apparatus for myopia control. The aim of the present disclosure is achieved by an optical apparatus and a method which facilitate a simple, yet efficient and reliable way to achieve myopia correction along with myopia control, as defined in the appended independent claims to which reference is made to. Advantageous features are set out in the appended dependent claims.

Throughout the description and claims of this specification, the words "*comprise*", "*include*", "*have*", and "*contain*" and variations of these words, for example "*comprising*" and "*comprises*", mean "*including but not limited to*", and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1A depicts an example implementation of an adaptive optical apparatus with myopia control, in accordance with an embodiment of the present disclosure;
FIGs. 1B and 1C depict alternative arrangements of lenses that can be implemented in a lens stack of the optical apparatus, in accordance with different embodiments of the present disclosure;
FIG. 1D depicts different portions of a passive lens of the lens stack, in accordance with an embodiment of the present disclosure; and
FIG. 2 illustrates steps of a method employing an adaptive optical apparatus for myopia control, in accordance with an embodiment of the present disclosure; and

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides an optical apparatus comprising:
a lens stack per eye, comprising:
   an active lens; and
   a passive lens, wherein a magnitude of a negative optical power at a central portion of the passive lens is larger than a magnitude of a negative optical power at a peripheral portion of the passive lens;
an eye tracker; and
a processor configured to:
   determine gaze directions of a user's eyes by utilising the eye tracker;
   determine a focussing distance of the user's eyes, based on the gaze directions of the user's eyes;
   detect when the focussing distance is less than a first predefined threshold distance; and
   when it is detected that the focussing distance is less than the first predefined threshold distance,
      detect whether a gaze of a given eye of the user passes through the central portion or the peripheral portion of the passive lens, based on a gaze direction of the given eye;
      select a magnitude of a positive optical power to be produced in the active lens, based on whether the gaze of the given eye passes through the central portion or the peripheral portion of the passive lens, wherein a magnitude of the positive optical power is smaller than the magnitude of the negative optical power at the central portion of the passive lens; and
      generate a drive signal to control the active lens to produce the positive optical power in the active lens.

In a second aspect, an embodiment of the present disclosure provides a method implemented using an optical apparatus comprising a lens stack per eye, wherein the lens stack comprises an active lens and a passive lens, wherein a magnitude of a negative optical power at a central portion of the passive lens is larger than a magnitude of a negative optical power at a peripheral portion of the passive lens, the method comprising:
determining gaze directions of a user's eyes by utilising an eye tracker of the optical apparatus;
determining a focussing distance of the user's eyes, based on the gaze directions of the user's eyes;
detecting when the focussing distance is less than a first predefined threshold distance; and
when it is detected that the focussing distance is less than the first predefined threshold distance,
   detecting whether a gaze of a given eye of the user passes through the central portion or the peripheral portion of the passive lens, based on a gaze direction of the given eye;
   selecting a magnitude of a positive optical power to be produced in the active lens, based on whether the gaze of the given eye passes through the central portion or the peripheral portion of the passive lens, wherein a magnitude of the positive optical power is smaller than the magnitude of the negative optical power at the central portion of the passive lens; and
   generating a drive signal to control the active lens to produce the positive optical power in the active lens.

The present disclosure provides the aforementioned optical apparatus and the aforementioned method, which facilitate a simple, yet robust, efficient and reliable way to achieve myopia correction along with myopia control. The criteria of the focussing distance being less than the first predefined threshold distance pertains to near work, namely when the user is reading or looking at nearby objects. Producing the positive optical power in the active lens for near work allows to reduce a total optical power produced by the lens stack. Notably, the total optical power is produced by a combination of the positive optical power produced in the active lens (when the aforesaid criteria is satisfied) and the negative optical power of the passive lens. As a result, during near work, the given eye does not have to compensate for an entirety of the negative optical power of the passive lens on its own. This, in turn, minimizes eye strain and improves a myopia control effect. Notably, having the magnitude of the negative optical power at the central portion of the passive lens that is larger than the magnitude of the negative optical power at the peripheral portion of the passive lens allows for the myopia control effect. Notably, this specific central-peripheral negative optical power gradient (in the passive lens) creates a controlled peripheral defocus effect, that is beneficial for supporting myopia control, when the gaze of the given eye passes through the central portion of the passive lens. Moreover, producing the positive optical power in the active lens (for near work) also minimizes any optical artifacts that are associated with negative Fresnel lenses that are typically used in conventional adaptive lenses intended for myopia correction. Furthermore, selecting the magnitude of the positive optical power (for near work) based on whether the gaze passes through the central portion or the peripheral portion provides an additional technical benefit of allowing for adjustment of the total optical power to be optimal for the current gaze direction. In other words, the total optical power can be adjusted to provide a faultless optical performance in real time or near-real time, across various usage contexts, based whether the gaze of the given eye passes through the central portion or the peripheral portion of the passive lens. Moreover, as there is no zone in the lens stack where any defocus is created (namely, unlike Defocus Incorporated Multiple Segments (DIMS) and Highly Aspherical Lenslet Target (HALT) technology), the optical apparatus and the method allow for high contrast viewing without any blurring. It is noteworthy that all these technical benefits are achieved by the simple structure of the lens stack, and can be achieved by producing a single optical power across an entirety of the active lens at a given time instant. This production of the single optical power uniformly across the active lens ensures a consistent and controlled total optical power profile across the lens stack, which enables the optical apparatus to achieve both blurring avoidance and effective myopia control. Furthermore, by producing the single optical power, the optical apparatus avoids abrupt optical discontinuities that arise from localized or segmented activation of adaptive lenses. This uniform activation of the active lens ensures consistent visual quality across an entirety of the user's visual field, and eliminates unintended peripheral blurring artifacts.

Pursuant to embodiments, the optical apparatus is suitable to be used for slowing down myopia development. When the optical apparatus is used for a considerable time period (for example, such as a time period of 12 months or more), it leads to slowing down of progression of myopia development in the user. As the optical apparatus produces the positive optical power in the active lens automatically (namely, as soon as near work is detected), the user's eyes are not required to over-accommodate during near work. This, in turn, reduces near work induced transient myopia (NITM). Notably, during a period of prolonged near work, the eye's accommodation mechanism adapts to a near level of accommodation response, such that when the user attempts to re-focus on a distant object (namely, attempts to shift to distance vision), a degree of myopia is temporarily induced; this is also called NITM. Repeated NITM could potentially cause progression of myopia development. By preventing occurrences of NITM for the user, the optical apparatus leads to slowing down of the progression of myopia development in the user. It is noteworthy that the optical apparatus is particularly susceptible for use in children, because myopia development largely influences children, as their eyes continue to grow during childhood. In an example implementation, the optical apparatus can be implemented as therapeutic glasses for children. This promotes a healthy development of a myopic eye to correct itself during a growth phase. However, the optical apparatus can also be used by adults.

Throughout the present disclosure, the term "*optical apparatus*" refers to an apparatus that is to be worn over user's eyes, and can also be referred to as an eyewear apparatus. Examples of such an optical apparatus include, but are not limited to, a pair of glasses, a pair of sunglasses, smart glasses.

Throughout the present disclosure, the term "passive lens" refers to an optical element whose optical power cannot be changed. For a given eye of the user, the optical power of the passive lens is pre-selected based on a base optical power of the given eye for distance vision. The term "base optical power" refers to a pre-determined negative optical power (for distance vision) for the given eye. The base optical power may be pre-determined according to a prescription of the user, or to conform to the user's need. It will be appreciated that in addition to myopia correction, the passive lens may also provide other types of corrections, for example, such as astigmatism correction and/or prismatic corrections.

As mentioned earlier, the magnitude of the negative optical power at the central portion of the passive lens is larger than the magnitude of the negative optical power at the peripheral portion of the passive lens. This forms a physical negative optical power gradient in the passive lens, which enables controlled peripheral defocus effect for myopia control when the gaze of the given eye passes through the central portion. A difference between the magnitude of the negative optical power at the central portion and the magnitude of the negative optical power at the peripheral portion is referred to as a myopia control value. The myopia control value could, for example, be lie in a range of 0.75 dioptre to 3.50 dioptre. As an example, the myopia control value could be 1.0 dioptre.

Notably, the peripheral portion surrounds the central portion. The central portion of the passive lens could be shaped as a simple closed curve. Herein, the term "simple closed curve" refers to a connected curve that does not cross itself, and ends at the same point where it begins. Examples of simple closed curves include, but are not limited to, quadrilaterals, hexagons, octagons, circles, and ellipses. It will be appreciated that despite being called a "curve", a simple closed curve does not actually have to be curved in shape. Some simple closed curves are made of line segments only, and are known as polygons (for example, such as quadrilaterals, hexagons, octagons, and the like), while some simple closed curves are made by curved lines only (for example, such as circles and ellipses). Other simple closed curves are made of both line segments and curved lines. Optionally, the central portion has a diameter that lies in a range of 5 millimetres to 15 millimetres; more optionally, in a range of 8 millimetres to 10 millimetres. Optionally, an angular width of the central portion could lie in a range of 15 degrees to 60 degrees; more optionally, in a range of 20 degrees to 45 degrees. As an example, the passive lens may be implemented as an aspherical lens, or similar.

Additionally, there may be an intermediate portion in the passive lens that lies between the central portion and the peripheral portion, wherein a magnitude of a negative optical power at the intermediate portion lies between the magnitude of the negative optical power at the central portion and the magnitude of the negative optical power at the peripheral portion. Optionally, the magnitude of the negative optical power at the intermediate portion varies gradually from the magnitude of the negative optical power at the central portion (at a boundary between the intermediate portion and the central portion) to the magnitude of the negative optical power at the peripheral portion (at a boundary between the intermediate portion and the peripheral portion). By "gradually", it is meant that the magnitude of the negative optical power is not changed by more than a predefined percent across neighbouring sub-portions in the intermediate portion. The predefined percent may, for example, lie in a range of 2 to 10 percent. This facilitates a smooth transition in the magnitude of the negative optical power in a radial direction, namely from the central portion to the peripheral portion. Such a smooth transition in optical power allows for a more natural visual experience for the user, by eliminating an "image jump" that can occur with lined lenses (where objects appear to suddenly change position when crossing from one lens portion to another lens portion). The smooth transition in optical power also reduces a need for abrupt shifts in eye focus, thereby minimizing eye strain and discomfort. This lens architecture, incorporating the gradual negative optical power gradient, minimizes visual discontinuities for providing a smooth visual experience, as the gaze transitions across regions of differing optical power.

Throughout the present disclosure, the term "active lens" refers to a lens whose optical power can be changed. The active lens may comprise an active material encased between at least two substrates having electrodes deposited thereon, and controlling means that is employed to control the active material to produce different optical powers. In some implementations, the active material is a liquid crystal material. In this regard, the active lens may be implemented as a liquid crystal lens or a liquid crystal Fresnel lens. In such implementations, the controlling means is electrical. In other implementations, the active material comprises an electrically-conducting liquid and an electrically-insulating liquid. In this regard, the active lens may be implemented as an electro-wetting lens. In such implementations, the controlling means is electrical. It will be appreciated that other types of active lenses may also be implemented. Active lenses are well-known in the art.

In the lens stack, the active lens covers essentially an entire lens area of the passive lens. As a result, there are no edge effects, namely no discontinuities, in the lens stack. However, it will be appreciated that in practice, an optical power at an extreme periphery of the active lens may differ (even if, only slightly) from that on a remaining central portion of the active lens, due to technical reasons. This may be specially applicable for liquid crystal lenses. Therefore, for a practical implementation of embodiments of the present disclosure, it is required to have an adjustable, homogenous portion of the active lens to be larger than the central portion of the passive lens. The term "adjustable, homogeneous portion" refers to a central portion of the active lens where a same optical power can be produced homogeneously. Such an adjustable, homogeneous portion of the active lens suffices even if it does not cover an entirety of the peripheral portion of the passive lens. In this regard, a diameter of the adjustable, homogeneous portion of the active lens may, for example, lie in a range of 25 millimetres to 50 millimetres; more optionally, in a range of 30 millimetres to 40 millimetres. This allows for a significant shift in the gaze direction with respect to a central axis of the lens stack.

The processor is configured to control an overall operation of the optical apparatus. The processor is communicably coupled to the eye tracker and the controlling means of the active lens. The processor could be implemented as any one of: a microprocessor, a microcontroller, or a controller. As an example, the processor could be implemented as an application-specific integrated circuit (ASIC) chip or a reduced instruction set computer (RISC) chip.

Throughout the present disclosure, the term "eye tracker" refers to specialized equipment for detecting and/or following a gaze of a given eye. Such eye tracking is performed when the optical apparatus, in operation, is worn by the user. The eye tracker may also be referred to as a gaze tracker or gaze-tracking means. The eye tracker could be implemented as at least one of:
(i) a plurality of light sensors and optionally, a plurality of light emitters, wherein the plurality of light sensors are employed to sense an intensity of light that is incident upon these light sensors upon being reflected off an ocular surface of the given eye, and determine a direction from which the light is incident upon these light sensors, wherein the gaze direction of the given eye is determined based on the intensity of light and the aforesaid direction;
(ii) a plurality of light field sensors employed to capture a wavefront of light reflected off the ocular surface of the given eye, wherein the wavefront is indicative of a geometry of a part of the ocular surface that reflected the light, and wherein the gaze direction of the given eye is determined based on the wavefront;
(iii) at least one camera, employed to determine a position of a pupil of the given eye with respect to corners of the given eye, and optionally, to determine a size and/or a shape of the pupil of the given eye, wherein the gaze direction of the given eye is determined based on the position of the pupil with respect to the corners, and optionally the size and/or the shape of the pupil;
(iv) at least one infrared (IR) light source and at least one IR camera, wherein the at least one IR light source is employed to emit IR light towards the given eye, while the at least one IR camera is employed to determine a position of the pupil of the given eye with respect to at least one corneal reflection of the IR light, wherein the gaze direction of the given eye is determined based on the position of the pupil with respect to the at least one corneal reflection;
(v) contact lenses with sensors (for example, such as a microelectromechanical systems (MEMS) accelerometer and a gyroscope employed to detect a movement and an orientation of the given eye, and/or electrodes employed to measure electrooculographic (EOG) signals generated by the movement of the given eye), wherein the gaze direction of the given eye is determined based on the movement and the orientation of the given eye.

Such eye trackers are well-known in the art. Various components of the eye tracker can be arranged on a frame of optical apparatus or a periphery of the lens stack. Herein, the term "periphery" refers to an area in a proximity of an edge of the lens stack. Optionally, said area is on at least one of: a world-facing surface of the lens stack, a user-facing surface of the lens stack, a curved surface (on a side) between the world-facing surface and the user-facing surface. It is to be understood that the term "*world-facing surface*" refers to a surface of the lens stack that faces outward, away from the user's eye, towards a real-world environment in which the user is present. The term "*user-facing surface*" refers to a surface of the lens stack that faces inward, towards the user's eye. The term "*curved surface*" refers to a narrow, side curved surface that lies between the world-facing surface and the user-facing surface. It will be appreciated that the curved surface is in contact with the frame when the lens stack is fit inside the frame (for example, having a full rim or a partial rim).

Optionally, the focussing distance of the user's eyes is determined based on a convergence of the gaze directions of the user's eyes. In this regard, the focussing distance can be determined, based on an inter-pupillary distance of the user, by using triangulation. Throughout the present disclosure, the term "focussing distance" refers to an optical depth at which the user is focussing (namely, looking).

Additionally, the optical apparatus may further comprise at least one depth sensor. Optionally, in such a case, the processor is configured to generate a depth image of a real-world scene being seen by the user; and determine the focussing distance of the user, based also on the depth image of the real-world scene. In this regard, the focussing distance can be determined based on an intersection of the gaze direction of the given eye with the depth image. The at least one depth sensor could be implemented as at least one of: a depth camera, a time-of-flight (ToF) camera, an ultrasound imaging sensor, a radar, a light detection and ranging (LiDAR) sensor.

As mentioned earlier, the criteria of the focussing distance being less than the first predefined threshold distance pertains to near work, namely when the user is reading or looking at nearby objects. As near work correction typically corresponds to a focussing distance of 0.5 metre or less, it may be beneficial to select the first predefined threshold distance as a distance that is slightly larger than 0.5 metre. This allows for turning on the near work correction on time for near work use. In this regard, the first predefined threshold distance may, for example, lie in a range of 0.5 metre to 0.9 metre. As an example, the first predefined threshold distance may be selected as 0.8 metre.

When it is detected that the focussing distance is less than the first predefined threshold distance (namely, for near work), the magnitude of the positive optical power to be produced in the active lens is selected, based on whether the gaze of the given eye passes through the central portion or the peripheral portion of the passive lens, as will be described later with respect to different implementations of the present disclosure. In this regard, the processor and the active lens work in conjunction, for enabling near work strain relief, while also implementing gaze-dependent compensation for the negative optical power gradient of the passive lens. This compensation depends on wherefrom the gaze of the given eye passes, thus enabling a wide viewing area with optimized optical quality. Moreover, the magnitude of the positive optical power to be produced in the active lens is selected based on a near-work correction value for the given eye of the user. The term "near-work correction value" refers to a pre-determined positive optical power for focussing at a distance that is smaller than the first predefined threshold distance. The near-work correction value may be pre-determined according to a prescription of the user, or to conform to the user's need. If the user is slightly myopic (namely, a magnitude of the base optical power is less than or equal to 3 dioptres), the near-work correction value may be almost equal to a magnitude of the base optical power. In other words, the near-work correction value may lie within a predefined threshold range from the magnitude of the base optical power. If the user is strongly myopic (namely, the magnitude of the base optical power is more than 3 dioptres), the user would need a negative optical power even for near work. In this case, the near-work correction value may lie within the predefined threshold range from a difference between the magnitude of the base optical power and a predefined value. The predefined value may, for example, lie in a range of 1.5 dioptres and 2.5 dioptres. As an example, the predefined value may be 2 dioptres.

Notably, the magnitude of the positive optical power (for near work) is smaller than the magnitude of the negative optical power at the central portion of the passive lens, for all the implementations of the present disclosure. This allows to reduce the total optical power produced by the lens stack for near work. As a result, the given eye does not have to compensate for the entirety of the negative optical power of the passive lens on its own, during near work. This minimizes eye strain and improves the myopia control effect.

In this regard, the drive signal is generated to control the active lens to produce the positive optical power in the active lens. Such drive signals are generated depending on a type of the controlling means employed to control the active material in the active lens to produce different optical powers. Generating drive signals is well-known in the art.

Moreover, optionally, the processor is configured to:
when it is detected that the focussing distance is not less than the first predefined threshold distance,
detect when the focussing distance is more than a second predefined threshold distance; and
when it is detected that the focussing distance is more than the second predefined threshold distance,
   detect whether the gaze of the given eye passes through the central portion or the peripheral portion of the passive lens, based on the gaze direction of the given eye;
   select another optical power to be produced in the active lens, based on whether the gaze of the given eye passes through the central portion or the peripheral portion of the passive lens, wherein the another optical power is different from said positive optical power; and
   generate another drive signal to control the active lens to produce the another optical power in the active lens.

The criteria of the focussing distance being more than the second predefined threshold distance pertains to distance vision, namely when the user is looking at distant objects. As distance vision correction (namely, myopia correction) typically corresponds to a focussing distance of 2 metres or more, it may be beneficial to select the second predefined threshold distance as a distance that is (at least slightly) smaller than 2 metres. This allows for turning on the distance vision correction on time for distant viewing. In this regard, the second predefined threshold distance may, for example, lie in a range of 1.2 metres to 2 metres. As an example, the second predefined threshold distance may be selected as 1.5 metres.

When it is detected that the focussing distance is more than the second predefined threshold distance (namely, for distance vision), the another optical power to be produced in the active lens is selected, based on whether the gaze of the given eye passes through the central portion or the peripheral portion of the passive lens. The another optical power (for distance vision) is different from the aforesaid positive optical power (for near work). This another optical power could be a positive optical power, a zero optical power, or a negative optical power, as will be described later with respect to the different implementations of the present disclosure. Notably, in case of distance vision, the total optical power is produced by a combination of the another optical power produced in the active lens and the negative optical power of the passive lens. Selecting the another optical power (for distance vision) based on whether the gaze passes through the central portion or the peripheral portion allows for adjustment of the total optical power to be optimal for the current gaze direction. In other words, the total optical power can be adjusted to provide a faultless optical performance in real time or near-real time, based whether the gaze of the given eye passes through the central portion or the peripheral portion of the passive lens. It is noteworthy that these technical benefits are achieved by the simple structure of the lens stack, and can be achieved by producing a single optical power across an entirety of the active lens at a given time instant.

Additionally, optionally, the processor is configured to:
when it is detected that the focussing distance is not less than the first predefined threshold distance, and is not more than the second predefined threshold distance;
select yet another optical power to be produced in the active lens, based on the focussing distance, wherein the yet another optical power lies between said positive optical power and the another optical power; and
generate yet another drive signal to control the active lens to produce the yet another optical power in the active lens.

The criteria of the focussing distance being not less than the first predefined threshold distance, and not more than the second predefined threshold distance pertains to a case when the focussing distance lies between the first predefined threshold distance and the second predefined threshold distance, namely intermediate vision (for example, for computer work or similar). When it is detected that the focussing distance is not less than the first predefined threshold distance, and is not more than the second predefined threshold distance (namely, for intermediate vision), the yet another optical power to be produced in the active lens is selected, based on the focussing distance, such that the yet another optical power lies between the aforesaid positive optical power (for near work) and the another optical power (for distance vision). Such a selection can be adjusted according to a change in the focussing distance. If the change in the focussing distance takes place gradually and continuously, the selection would be adjusted gradually and continuously. By "gradually", it is meant that the focussing distance has not changed by more than a predefined percent within a predefined time period. In this regard, the predefined percent may, for example, lie in a range of 2 to 10 percent, while the predefined time period may lie in a range of 0.5 second to 2 seconds. Otherwise, if the change in the focussing distance takes place in steps, the selection would be adjusted depending on the steps. However, in order to smoothen a transition in the optical power, the selection can be adjusted continuously.

It will be appreciated that both the positive optical power (for near work) and the another optical power (for distance vision) are selected based on whether the gaze passes through the central portion or the peripheral portion; in this regard, selecting the yet another optical power (for intermediate vision) such that it lies between the positive optical power and the another optical power ensures that the yet another optical power is also selected based on whether the gaze passes through the central portion or the peripheral portion. This yet another optical power could be a positive optical power, a zero optical power, or a negative optical power, in the different implementations of the present disclosure. Notably, in case of intermediate vision, the total optical power is produced by a combination of the yet another optical power produced in the active lens and the negative optical power of the passive lens. Selecting the yet another optical power (for intermediate vision) based on whether the gaze passes through the central portion or the peripheral portion allows for adjustment of the total optical power to be optimal for the current gaze direction. In other words, the total optical power can be adjusted to provide a faultless optical performance in real time or near-real time, based whether the gaze of the given eye passes through the central portion or the peripheral portion of the passive lens. It is noteworthy that these technical benefits are achieved by the simple structure of the lens stack, and can be achieved by producing a single optical power across an entirety of the active lens at a given time instant.

There will be now described the different implementations of the present disclosure, and how the positive optical power (for near work), the another optical power (for distance vision), and the yet another optical power (for intermediate vision) can be selected in these different implementations. In this regard, following definitions have been utilised:
(i) the base optical power is the pre-determined negative optical power for the given eye of the user, the base optical power having a magnitude "BP",
(ii) the myopia control value "MC" is the difference between the magnitude of the negative optical power at the central portion of the passive lens and the magnitude of the negative optical power at the peripheral portion of the passive lens, and
(iii) the near-work correction value "NC" is the pre-determined positive optical power for focussing at a distance that is smaller than the first predefined threshold distance with the given eye.

Notably, the magnitude "BP" of the base optical power, the myopia control value "MC" and the near-work correction value "NC" are positive values.

In a first implementation, the magnitude of the negative optical power at the peripheral portion of the passive lens lies within a predefined threshold range from the magnitude "BP" of the base optical power, while the magnitude of the negative optical power at the central portion of the passive lens lies within the predefined threshold range from a sum of the magnitude "BP" of the base optical power and the myopia control value "MC". Thus, in the first implementation, the negative optical power at the central portion is over-compensated by addition of the myopia control value "MC". Throughout the present disclosure, the predefined threshold range could be defined as +-0.25 dioptre; more optionally, as +-0.1 dioptre. As an example, if the predefined threshold range were defined as +-0.1 dioptre, the magnitude of the negative optical power at the peripheral portion would lie in a range of (BP - 0.1) dioptre to (BP + 0.1) dioptre, while the magnitude of the negative optical power at the central portion would lie in a range of (BP + MC - 0.1) dioptre to (BP + MC + 0.1) dioptre.

Optionally, in the first implementation, the processor is configured to:
when it is detected that the focussing distance is less than the first predefined threshold distance, and the gaze of the given eye passes through the central portion of the passive lens,
select the magnitude of the positive optical power to be produced in the active lens as a first value that lies within the predefined threshold range from a sum of the near-work correction value "NC" and the myopia control value "MC".

As an example, if the predefined threshold range were defined as +-0.1 dioptre, the magnitude of the positive optical power to be produced in the active lens (for near work and for central gaze) would lie in a range of (NC + MC - 0.1) dioptre to (NC + MC + 0.1) dioptre. A technical benefit of this is that it at least partly cancels the base optical power of the passive lens, thereby resulting in the total optical power that is optimal for near work, while also providing myopia correction at the peripheral portion. In other words, this configuration provides strain relief during near work, while also ensuring a peripheral therapeutic effect. Additionally, because the total optical power is adjusted in a gaze-adaptive manner, the user experiences high-quality vision across a wide visual field during near work.

Optionally, in the first implementation, the processor is configured to:
when it is detected that the focussing distance is less than the first predefined threshold distance, and the gaze of the given eye passes through the peripheral portion of the passive lens,
select the magnitude of the positive optical power to be produced in the active lens as a second value that lies within the predefined threshold range from the near-work correction value "NC".

As an example, if the predefined threshold range were defined as +-0.1 dioptre, the magnitude of the positive optical power to be produced in the active lens (for near work and for peripheral gaze) would lie in a range of (NC - 0.1) dioptre to (NC + 0.1) dioptre. A technical benefit of this implementation is that the processor and the active lens work in conjunction, such that it introduces near work correction (i.e., near work strain relief) on the peripheral portion, along with enabling gaze-dependent compensation for vision correction, when looking through the peripheral portion of the passive lens.

Moreover, optionally, in the first implementation, the processor is configured to:
when it is detected that the focussing distance is not less than the first predefined threshold distance, the focussing distance is more than the second predefined threshold distance, and the gaze of the given eye passes through the central portion of the passive lens,
select a magnitude of another positive optical power to be produced in the active lens as a third value that lies within the predefined threshold range from the myopia control value "MC"; and
generate a drive signal to control the active lens to produce the another positive optical power of said magnitude in the active lens.

It will be appreciated that this another positive optical power is the aforementioned another optical power that is to be produced for distance vision and for central gaze corresponding to the first implementation. As an example, if the predefined threshold range were defined as +-0.1 dioptre, the magnitude of the another positive optical power to be produced in the active lens (for distance vision and for central gaze) would lie in a range of (MC - 0.1) dioptre to (MC + 0.1) dioptre. A technical benefit of this is that it cancels central over-compensation of the negative optical power of the passive lens for distance vision when the user sees through the central portion, whilst providing proper myopia correction at the peripheral portion.

Additionally, optionally, in the first implementation, the processor is configured to:
when it is detected that the focussing distance is not less than the first predefined threshold distance, the focussing distance is more than the second predefined threshold distance, and the gaze of the given eye passes through the peripheral portion of the passive lens,
select an optical power to be produced in the active lens as a fourth value that lies within the predefined threshold range from a zero optical power; and
generate a drive signal to control the active lens to produce said optical power in the active lens.

It will be appreciated that this optical power is the aforementioned another optical power that is to be produced for distance vision and for peripheral gaze corresponding to the first implementation. As an example, if the predefined threshold range were defined as +-0.1 dioptre, the optical power to be produced in the active lens (for distance vision and for peripheral gaze) would lie in a range of -0.1 dioptre to +0.1 dioptre. A technical benefit of this is that it provides perfect focus for distance vision even when the gaze is off-centre.

Furthermore, in the first implementation, the yet another optical power to be produced in the active lens for intermediate vision and for central gaze may lie in a range between the aforementioned third value and the aforementioned first value. In other words, the yet another optical power for central gaze lies in a range of (MC - 0.1) dioptre to (NC + MC + 0.1) dioptre.

Similarly, in the first implementation, the yet another optical power to be produced in the active lens for intermediate vision and for peripheral gaze may lie in a range between the aforementioned fourth value and the aforementioned second value. In other words, the yet another optical power for central gaze lies in a range of -0.1 dioptre to (NC + 0.1) dioptre.

In a second implementation, the magnitude of the negative optical power at the peripheral portion of the passive lens lies within a predefined threshold range from a difference between the magnitude "BP" of the base optical power and the myopia control value "MC", and the magnitude of the negative optical power at the central portion of the passive lens lies within the predefined threshold range from the magnitude "BP" of the base optical power. Thus, in the second implementation, the negative optical power at the peripheral portion is under-compensated by subtraction of the myopia control value "MC", while the negative optical power at the central portion is fully-compensated. As an example, if the predefined threshold range were defined as +-0.1 dioptre, the magnitude of the negative optical power at the peripheral portion would lie in a range of (BP - MC - 0.1) dioptre to (BP - MC + 0.1) dioptre, while the magnitude of the negative optical power at the central portion would lie in a range of (BP - 0.1) dioptre to (BP + 0.1) dioptre.

Optionally, in the second implementation, the processor is configured to:
when it is detected that the focussing distance is less than the first predefined threshold distance, and the gaze of the given eye passes through the central portion of the passive lens,
select the magnitude of the positive optical power to be produced in the active lens as a fifth value that lies within the predefined threshold range from the near-work correction value "NC".

As an example, if the predefined threshold range were defined as +-0.1 dioptre, the magnitude of the positive optical power to be produced in the active lens (for near work and for central gaze) would lie in a range of (NC - 0.1) dioptre to (NC + 0.1) dioptre. A technical benefit of this is that it at least partly cancels the base optical power of the passive lens, thereby resulting in the total optical power that is optimal for near work, while also providing myopia correction at the peripheral portion.

Optionally, in the second implementation, the processor is configured to:
when it is detected that the focussing distance is less than the first predefined threshold distance, and the gaze of the given eye passes through the peripheral portion of the passive lens,
select the magnitude of the positive optical power to be produced in the active lens as a sixth value that lies within the predefined threshold range from a difference between the near-work correction value "NC" and the myopia control value "MC".

As an example, if the predefined threshold range were defined as +-0.1 dioptre, the magnitude of the positive optical power to be produced in the active lens (for near work and for peripheral gaze) would lie in a range of (NC - MC - 0.1) dioptre to (NC - MC + 0.1) dioptre. A technical benefit of this is that it introduces near work correction (i.e., near work strain relied) during peripheral gazing, whilst also preserving optical characteristics necessary for peripheral myopic defocus on the peripheral portion. This implementation prevents over-cancellation of the peripheral negative power in the passive lens. As a result, the therapeutic defocus profile is maintained, ensuring continued myopia control even during near tasks involving peripheral gaze. This further contributes to stable and consistent optical performance across varying gaze directions.

Moreover, optionally, in the second implementation, the processor is configured to:
when it is detected that the focussing distance is not less than the first predefined threshold distance, the focussing distance is more than a second predefined threshold distance, and the gaze of the given eye passes through the central portion of the passive lens,
select another optical power to be produced in the active lens as a seventh value that lies within the predefined threshold range from a zero optical power; and
generate a drive signal to control the active lens to produce said another optical power in the active lens.

It will be appreciated that this another optical power is the aforementioned another optical power that is to be produced for distance vision and for central gaze corresponding to the second implementation. As an example, if the predefined threshold range were defined as +-0.1 dioptre, the another optical power to be produced in the active lens (for distance vision and for central gaze) would lie in a range of -0.1 dioptre to +0.1 dioptre. A technical benefit of this is that it allows the lens stack to act as a fixed myopia control lens. In other words, by producing an almost zero optical power, the passive lens is allowed to work as a fixed myopia control lens for distance vision.

Additionally, optionally, in the second implementation, the processor is configured to:
when it is detected that the focussing distance is not less than the first predefined threshold distance, the focussing distance is more than the second predefined threshold distance, and the gaze of the given eye passes through the peripheral portion of the passive lens,
select a magnitude of a negative optical power to be produced in the active lens as an eighth value that lies within the predefined threshold range from the myopia control value "MC"; and
generate a drive signal to control the active lens to produce the negative optical power of said magnitude in the active lens.

It will be appreciated that this negative optical power is the aforementioned another optical power that is to be produced for distance vision and for peripheral gaze corresponding to the second implementation. As an example, if the predefined threshold range were defined as +-0.1 dioptre, the magnitude of the negative optical power to be produced in the active lens (for distance vision and for peripheral gaze) would lie in a range of (MC - 0.1) dioptre to (MC + 0.1) dioptre. A technical benefit of this is that it provides perfect focus for distance vision even when the gaze is off-centre.

Furthermore, in the second implementation, the yet another optical power to be produced in the active lens for intermediate vision and for central gaze may lie in a range between the aforementioned seventh value and the aforementioned fifth value. In other words, the yet another optical power for central gaze lies in a range of -0.1 dioptre to (NC + 0.1) dioptre.

Similarly, in the second implementation, the yet another optical power to be produced in the active lens for intermediate vision and for peripheral gaze may lie in a range between the aforementioned eighth value and the aforementioned sixth value. In other words, the yet another optical power for central gaze lies in a range of -(MC + 0.1) dioptre to (NC - MC + 0.1) dioptre.

The present disclosure also relates to the method as described above. Various embodiments and variants disclosed above, with respect to the aforementioned first aspect, apply *mutatis mutandis* to the method.

Optionally, the method further comprises:
when it is detected that the focussing distance is not less than the first predefined threshold distance,
detecting when the focussing distance is more than a second predefined threshold distance; and
when it is detected that the focussing distance is more than the second predefined threshold distance,
   detecting whether the gaze of the given eye passes through the central portion or the peripheral portion of the passive lens, based on the gaze direction of the given eye;
   selecting another optical power to be produced in the active lens, based on whether the gaze of the given eye passes through the central portion or the peripheral portion of the passive lens, wherein the another optical power is different from said positive optical power; and
   generating another drive signal to control the active lens to produce the another optical power in the active lens.

Optionally, the method further comprises:
when it is detected that the focussing distance is not less than the first predefined threshold distance, and is not more than the second predefined threshold distance;
selecting yet another optical power to be produced in the active lens, based on the focussing distance, wherein the yet another optical power lies between said positive optical power and the another optical power; and
generating yet another drive signal to control the active lens to produce the yet another optical power in the active lens.

As mentioned earlier, the following definitions have been utilised:
(i) the base optical power is the pre-determined negative optical power for a given eye of the user, the base optical power having a magnitude "BP",
(ii) the myopia control value "MC" is the difference between the magnitude of the negative optical power at the central portion of the passive lens and the magnitude of the negative optical power at the peripheral portion of the passive lens, and
(iii) the near-work correction value "NC" is the pre-determined positive optical power for focussing at a distance that is smaller than the first predefined threshold distance with the given eye.

In a first implementation, the magnitude of the negative optical power at the peripheral portion of the passive lens lies within a predefined threshold range from the magnitude "BP" of the base optical power, and the magnitude of the negative optical power at the central portion of the passive lens lies within the predefined threshold range from a sum of the magnitude "BP" of the base optical power and the myopia control value "MC". Optionally, the method further comprises:
when it is detected that the focussing distance is less than the first predefined threshold distance, and the gaze of the given eye passes through the central portion of the passive lens,
selecting the magnitude of the positive optical power to be produced in the active lens as a first value that lies within the predefined threshold range from a sum of the near-work correction value "NC" and the myopia control value "MC".

Optionally, in the first implementation, the method further comprises:
when it is detected that the focussing distance is less than the first predefined threshold distance, and the gaze of the given eye passes through the peripheral portion of the passive lens,
selecting the magnitude of the positive optical power to be produced in the active lens as a second value that lies within the predefined threshold range from the near-work correction value "NC".

Moreover, optionally, in the first implementation, the method further comprises:
when it is detected that the focussing distance is not less than the first predefined threshold distance, the focussing distance is more than a second predefined threshold distance, and the gaze of the given eye passes through the central portion of the passive lens,
selecting a magnitude of another positive optical power to be produced in the active lens as a third value that lies within the predefined threshold range from the myopia control value "MC"; and
generating a drive signal to control the active lens to produce the another positive optical power of said magnitude in the active lens.

Additionally, optionally, in the first implementation, the method further comprises:
when it is detected that the focussing distance is not less than the first predefined threshold distance, the focussing distance is more than the second predefined threshold distance, and the gaze of the given eye passes through the peripheral portion of the passive lens,
selecting an optical power to be produced in the active lens as a fourth value that lies within the predefined threshold range from a zero optical power; and
generating a drive signal to control the active lens to produce said optical power in the active lens.

In a second implementation, the magnitude of the negative optical power at the peripheral portion of the passive lens lies within a predefined threshold range from a difference between the magnitude "BP" of the base optical power and the myopia control value "MC", and the magnitude of the negative optical power at the central portion of the passive lens lies within the predefined threshold range from the magnitude "BP" of the base optical power. Optionally, the method further comprises:
when it is detected that the focussing distance is less than the first predefined threshold distance, and the gaze of the given eye passes through the central portion of the passive lens,
selecting the magnitude of the positive optical power to be produced in the active lens as a fifth value that lies within the predefined threshold range from the near-work correction value "NC".

Optionally, in the second implementation, the method further comprises:
when it is detected that the focussing distance is less than the first predefined threshold distance, and the gaze of the given eye passes through the peripheral portion of the passive lens,
selecting the magnitude of the positive optical power to be produced in the active lens as a sixth value that lies within the predefined threshold range from a difference between the near-work correction value "NC" and the myopia control value "MC".

Moreover, optionally, in the second implementation, the method further comprises:
when it is detected that the focussing distance is not less than the first predefined threshold distance, the focussing distance is more than a second predefined threshold distance, and the gaze of the given eye passes through the central portion of the passive lens,
selecting another optical power to be produced in the active lens as a seventh value that lies within the predefined threshold range from a zero optical power; and
generating a drive signal to control the active lens to produce said another optical power in the active lens.

Additionally, optionally, in the second implementation, the method further comprises:
when it is detected that the focussing distance is not less than the first predefined threshold distance, the focussing distance is more than the second predefined threshold distance, and the gaze of the given eye passes through the peripheral portion of the passive lens,
selecting a magnitude of a negative optical power to be produced in the active lens as an eighth value that lies within the predefined threshold range from the myopia control value "MC"; and
generating a drive signal to control the active lens to produce the negative optical power of said magnitude in the active lens.

### DETAILED DESCRIPTION OF THE DRAWINGS

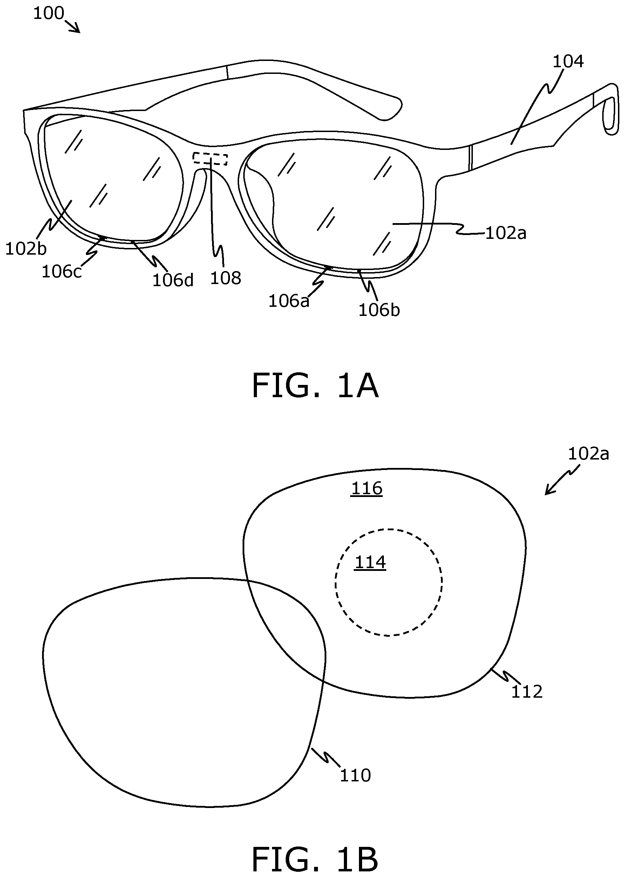

FIG. 1A depicts an example implementation of an optical apparatus **100** with myopia control, in accordance with an embodiment of the present disclosure. The optical apparatus **100** comprises a lens stack per eye (depicted as lens stacks **102a** and **102b**). The lens stacks **102a** and **102b** are fit inside a frame **104** (shown having a full rim, for illustration purposes only). The optical apparatus **100** further comprises an eye tracker (depicted as multiple components, which are marked as **106a-106d),** and a processor **108.**

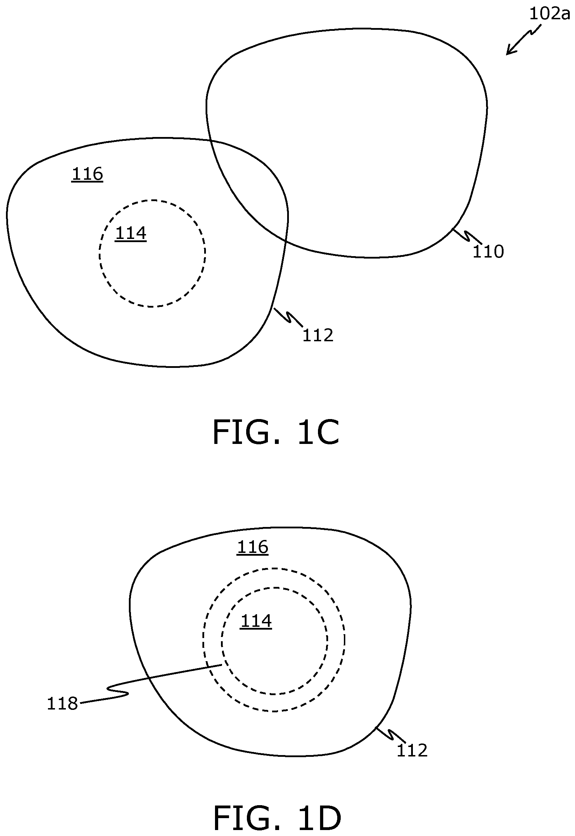

FIGs. 1B and 1C depict alternative arrangements of lenses that can be implemented in the lens stacks **102a** and **102b,** in accordance with different embodiments of the present disclosure. Each of the lens stacks **102a** and **102b** comprises an active lens and a passive lens. For illustration purposes only, the alternative arrangements have been shown for the lens stack **102a.** It will be appreciated that these alternative arrangements can be implemented similarly for the lens stack **102b.** The lens stacks **102a** and **102b** have been shown to be cut to fit the shape of the frame **104;** however, it will be appreciated that the lens stacks **102a** and **102b** are not limited to the shape shown in FIGs. 1A-1C.

The lens stack **102a** comprises an active lens **110** and a passive lens **112,** wherein a magnitude of a negative optical power at a central portion **114** of the passive lens **112** is larger than a magnitude of a negative optical power at a peripheral portion **116** of the passive lens **112.** FIG. 1B depicts an arrangement in which the passive lens **112** is on a user-facing side, while the active lens **110** is on a world-facing side. FIG. 1C depicts an alternative arrangement in which the active lens **110** is on the user-facing side, while the passive lens **112** is on the world-facing side.

FIG. 1D depicts different portions of the passive lens **112,** in accordance with an embodiment of the present disclosure. With reference to FIG. 1D, the passive lens **112** has an intermediate portion **118** that lies between the central portion **114** and the peripheral portion **116.** A magnitude of a negative optical power at the intermediate portion **118** lies between the magnitude of the negative optical power at the central portion **114** and the magnitude of the negative optical power at the peripheral portion **116.**

Pursuant to the present disclosure, the processor **108** is configured to:
determine gaze directions of a user's eyes by utilising the eye tracker **106a-106d;**
determine a focussing distance of the user's eyes, based on the gaze directions of the user's eyes;
detect when the focussing distance is less than a first predefined threshold distance; and
when it is detected that the focussing distance is less than the first predefined threshold distance,
   detect whether a gaze of a given eye of the user passes through the central portion **114** or the peripheral portion **116** of the passive lens **112,** based on a gaze direction of the given eye;
   select a magnitude of a positive optical power to be produced in the active lens **110,** based on whether the gaze of the given eye passes through the central portion **114** or the peripheral portion **116** of the passive lens **112,** wherein a magnitude of the positive optical power is smaller than the magnitude of the negative optical power at the central portion **114** of the passive lens **112;** and
   generate a drive signal to control the active lens **110** to produce the positive optical power in the active lens **110.**

FIGs. 1A-1D are merely examples, which should not unduly limit the scope of the claims herein. A person skilled in the art will recognize many variations, alternatives, and modifications of embodiments of the present disclosure.

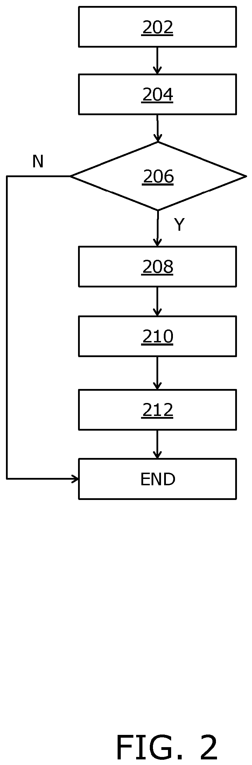

Referring to FIG. 2, illustrated are steps of a method employing an optical apparatus for myopia control, in accordance with an embodiment of the present disclosure. The method is implemented using the optical apparatus, which comprises a lens stack per eye, wherein the lens stack comprises an active lens and a passive lens, wherein a magnitude of a negative optical power at a central portion of the passive lens is larger than a magnitude of a negative optical power at a peripheral portion of the passive lens. At step **202,** gaze directions of a user's eyes are determined by utilising an eye tracker of the optical apparatus. At step **204,** a focussing distance of the user's eyes is determined, based on the gaze directions of the user's eyes. At step **206,** it is detected when the focussing distance is less than a first predefined threshold distance. If, at the step **206,** it is detected that the focussing distance is less than the first predefined threshold distance, step **208** is performed. At step **208,** it is detected whether a gaze of a given eye of the user passes through the central portion or the peripheral portion of the passive lens, based on a gaze direction of the given eye. At step **210,** a magnitude of a positive optical power to be produced in the active lens is selected, based on whether the gaze of the given eye passes through the central portion or the peripheral portion of the passive lens, wherein a magnitude of the positive optical power is smaller than the magnitude of the negative optical power at the central portion of the passive lens. At step **212,** a drive signal is generated to control the active lens to produce the positive optical power in the active lens. If, at the step **206,** it is detected that the focussing distance is not less than the first predefined threshold distance, processing stops, or continues according to an optional embodiment as explained earlier.

The aforementioned steps are only illustrative and other alternatives can also be provided where one or more steps are added, one or more steps are removed, or one or more steps are provided in a different sequence without departing from the scope of the claims.

## Claims

1. An optical apparatus (100) comprising:
a lens stack (102a, 102b) per eye, comprising:
an active lens (110); and
a passive lens (112), wherein a magnitude of a negative optical power at a central portion (114) of the passive lens is larger than a magnitude of a negative optical power at a peripheral portion (116) of the passive lens;
an eye tracker (106a-106d); and
a processor (108) configured to:
determine gaze directions of a user's eyes by utilising the eye tracker;
determine a focussing distance of the user's eyes, based on the gaze directions of the user's eyes;
detect when the focussing distance is less than a first predefined threshold distance; and
when it is detected that the focussing distance is less than the first predefined threshold distance,
detect whether a gaze of a given eye of the user passes through the central portion or the peripheral portion of the passive lens, based on a gaze direction of the given eye;
select a magnitude of a positive optical power to be produced in the active lens, based on whether the gaze of the given eye passes through the central portion or the peripheral portion of the passive lens, wherein a magnitude of the positive optical power is smaller than the magnitude of the negative optical power at the central portion of the passive lens; and
generate a drive signal to control the active lens to produce the positive optical power in the active lens.

2. The optical apparatus (100) of claim 1, wherein the processor (108) is configured to:
when it is detected that the focussing distance is not less than the first predefined threshold distance,
detect when the focussing distance is more than a second predefined threshold distance; and
when it is detected that the focussing distance is more than the second predefined threshold distance,
detect whether the gaze of the given eye passes through the central portion (114) or the peripheral portion (116) of the passive lens (112), based on the gaze direction of the given eye;
select another optical power to be produced in the active lens (110), based on whether the gaze of the given eye passes through the central portion or the peripheral portion of the passive lens, wherein the another optical power is different from said positive optical power; and
generate another drive signal to control the active lens to produce the another optical power in the active lens.

3. The optical apparatus (100) of claim 2, wherein the processor (108) is configured to:
when it is detected that the focussing distance is not less than the first predefined threshold distance, and is not more than the second predefined threshold distance;
select yet another optical power to be produced in the active lens (110), based on the focussing distance, wherein the yet another optical power lies between said positive optical power and the another optical power; and
generate yet another drive signal to control the active lens to produce the yet another optical power in the active lens.

4. The optical apparatus (100) of any of the preceding claims, wherein:
a base optical power is a pre-determined negative optical power for a given eye of the user, the base optical power having a magnitude "BP",
a myopia control value "MC" is a difference between the magnitude of the negative optical power at the central portion (114) of the passive lens (112) and the magnitude of the negative optical power at the peripheral portion (116) of the passive lens,
a near-work correction value "NC" is a pre-determined positive optical power for focussing at a distance that is smaller than the first predefined threshold distance with the given eye,
the magnitude of the negative optical power at the peripheral portion of the passive lens lies within a predefined threshold range from the magnitude "BP" of the base optical power, and
the magnitude of the negative optical power at the central portion of the passive lens lies within the predefined threshold range from a sum of the magnitude "BP" of the base optical power and the myopia control value "MC",
wherein the processor (108) is configured to:
when it is detected that the focussing distance is less than the first predefined threshold distance, and the gaze of the given eye passes through the central portion of the passive lens,
select the magnitude of the positive optical power to be produced in the active lens (110) as a first value that lies within the predefined threshold range from a sum of the near-work correction value "NC" and the myopia control value "MC".

5. The optical apparatus (100) of claim 4, wherein the processor (108) is configured to:
when it is detected that the focussing distance is less than the first predefined threshold distance, and the gaze of the given eye passes through the peripheral portion (116) of the passive lens (112),
select the magnitude of the positive optical power to be produced in the active lens (110) as a second value that lies within the predefined threshold range from the near-work correction value "NC".

6. The optical apparatus (100) of claim 4 or 5, wherein the processor (108) is configured to:
when it is detected that the focussing distance is not less than the first predefined threshold distance, the focussing distance is more than a second predefined threshold distance, and the gaze of the given eye passes through the central portion (114) of the passive lens (112),
select a magnitude of another positive optical power to be produced in the active lens (110) as a third value that lies within the predefined threshold range from the myopia control value "MC"; and
generate a drive signal to control the active lens to produce the another positive optical power of said magnitude in the active lens.

7. The optical apparatus (100) of claim 6, wherein the processor (108) is configured to:
when it is detected that the focussing distance is not less than the first predefined threshold distance, the focussing distance is more than the second predefined threshold distance, and the gaze of the given eye passes through the peripheral portion (116) of the passive lens (112),
select an optical power to be produced in the active lens (110) as a fourth value that lies within the predefined threshold range from a zero optical power; and
generate a drive signal to control the active lens to produce said optical power in the active lens.

8. The optical apparatus (100) of any of claims 1-3, wherein:
a base optical power is a pre-determined negative optical power for a given eye of the user, the base optical power having a magnitude "BP",
a myopia control value "MC" is a difference between the magnitude of the negative optical power at the central portion (114) of the passive lens (112) and the magnitude of the negative optical power at the peripheral portion (116) of the passive lens,
a near-work correction value "NC" is a pre-determined positive optical power for focussing at a distance that is smaller than the first predefined threshold distance with the given eye,
the magnitude of the negative optical power at the peripheral portion of the passive lens lies within a predefined threshold range from a difference between the magnitude "BP" of the base optical power and the myopia control value "MC", and
the magnitude of the negative optical power at the central portion of the passive lens lies within the predefined threshold range from the magnitude "BP" of the base optical power,
wherein the processor (108) is configured to:
when it is detected that the focussing distance is less than the first predefined threshold distance, and the gaze of the given eye passes through the central portion of the passive lens,
select the magnitude of the positive optical power to be produced in the active lens (110) as a fifth value that lies within the predefined threshold range from the near-work correction value "NC".

9. The optical apparatus (100) of claim 8, wherein the processor (108) is configured to:
when it is detected that the focussing distance is less than the first predefined threshold distance, and the gaze of the given eye passes through the peripheral portion (116) of the passive lens (112),
select the magnitude of the positive optical power to be produced in the active lens (110) as a sixth value that lies within the predefined threshold range from a difference between the near-work correction value "NC" and the myopia control value "MC".

10. The optical apparatus (100) of claim 8 or 9, wherein the processor (108) is configured to:
when it is detected that the focussing distance is not less than the first predefined threshold distance, the focussing distance is more than a second predefined threshold distance, and the gaze of the given eye passes through the central portion (114) of the passive lens (112),
select another optical power to be produced in the active lens (110) as a seventh value that lies within the predefined threshold range from a zero optical power; and
generate a drive signal to control the active lens to produce said another optical power in the active lens.

11. The optical apparatus (100) of claim 10, wherein the processor (108) is configured to:
when it is detected that the focussing distance is not less than the first predefined threshold distance, the focussing distance is more than the second predefined threshold distance, and the gaze of the given eye passes through the peripheral portion (116) of the passive lens (112),
select a magnitude of a negative optical power to be produced in the active lens (110) as an eighth value that lies within the predefined threshold range from the myopia control value "MC"; and
generate a drive signal to control the active lens to produce the negative optical power of said magnitude in the active lens.

12. The optical apparatus (100) of any of the preceding claims, wherein the optical apparatus is used for slowing down myopia development.

13. A method implemented using an optical apparatus (100) comprising a lens stack (102a, 102b) per eye, wherein the lens stack comprises an active lens (110) and a passive lens (112), wherein a magnitude of a negative optical power at a central portion (114) of the passive lens is larger than a magnitude of a negative optical power at a peripheral portion (116) of the passive lens, the method comprising:
determining gaze directions of a user's eyes by utilising an eye tracker (106a-106d) of the optical apparatus;
determining a focussing distance of the user's eyes, based on the gaze directions of the user's eyes;
detecting when the focussing distance is less than a first predefined threshold distance; and
when it is detected that the focussing distance is less than the first predefined threshold distance,
detecting whether a gaze of a given eye of the user passes through the central portion or the peripheral portion of the passive lens, based on a gaze direction of the given eye;
selecting a magnitude of a positive optical power to be produced in the active lens, based on whether the gaze of the given eye passes through the central portion or the peripheral portion of the passive lens, wherein a magnitude of the positive optical power is smaller than the magnitude of the negative optical power at the central portion of the passive lens; and
generating a drive signal to control the active lens to produce the positive optical power in the active lens.

14. The method of claim 13, further comprising:
when it is detected that the focussing distance is not less than the first predefined threshold distance,
detecting when the focussing distance is more than a second predefined threshold distance; and
when it is detected that the focussing distance is more than the second predefined threshold distance,
detecting whether the gaze of the given eye passes through the central portion (114) or the peripheral portion (116) of the passive lens (112), based on the gaze direction of the given eye;
selecting another optical power to be produced in the active lens (110), based on whether the gaze of the given eye passes through the central portion or the peripheral portion of the passive lens, wherein the another optical power is different from said positive optical power; and
generating another drive signal to control the active lens to produce the another optical power in the active lens.

15. The method of claim 14, further comprising:
when it is detected that the focussing distance is not less than the first predefined threshold distance, and is not more than the second predefined threshold distance;
selecting yet another optical power to be produced in the active lens (110), based on the focussing distance, wherein the yet another optical power lies between said positive optical power and the another optical power; and
generating yet another drive signal to control the active lens to produce the yet another optical power in the active lens.
